# EUROPEAN PATENT SPECIFICATION

(11) **EP 1 735 549 B1**
(45) Date of publication and mention of the grant of the patent: **03.03.2010**
(21) Application number: 05732374.3
(22) Date of filing: 30.03.2005
(51) Int. Cl.: F16H 55/30, F16H 7/08

(54) **CHAIN DRIVE**
KETTENANTRIEB
TRANSMISSION PAR CHAINE

(30) Priority: 31.03.2004 US 558586 P
(43) Date of publication of application: 27.12.2006
(73) Proprietor: Mendler, Edward Charles, Mill Valley, CA 94941 (US)
(72) Inventor: Mendler, Edward Charles, Mill Valley, CA 94941 (US)
(74) Representative: Käck, Jürgen
(86) International application number: PCT/US2005/011223
(87) International publication number: WO 2005/098281

(56) References cited:
- GB-A- 2 249 152
- GB-A- 2 257 491
- US-A- 3 633 552
- US-A- 5 611 301
- US-A1- 2003 221 896
- US-B1- 6 260 532

## Description

### BACKGROUND OF THE INVENTION

The fuel efficiency of reciprocating piston internal combustion engines can be significantly improved by varying the compression ratio of the engine. Compression ratio can be varied by adjusting the position of the crankshaft relative to the cylinder head. Variable compression ratio engines having an adjustable crankshaft to cylinder head spacing are shown in US Patent Nos. 6,260,532 B (Mendler); 6,443,106 B1 (Pischinger); 5,611,301 (Gillbrand); 3,633,522 (Huber); and German Patent No. DE 3644721 Al. A problem with these engines is that the spacing between the carnshaft chain or belt sprocket and crankshaft chain or belt sprocket changes, rendering current production chain and belt valve drive systems non-functional. The camshaft to crankshaft sprocket center distance is expected to vary by about 6 millimeters in variable compression ratio 4-cylinder in-line automotive reciprocating piston engines.

To accommodate the change in camshaft to crankshaft sprocket center distance, US patents 6,260,532 B1; 5,611,301 and 3,633,522 employ an idler sprocket or gear on a secondary shaft mounted ion the engine housing, where the secondary shaft is located in the housing on a plain generally perpendicular to the traversed motion of the crankshaft. These systems enable change of camshaft to crankshaft sprocket center distance, but add length and complexity to the engine and may increase internal engine friction losses. An eccentric coupling element is shown in 6,443,106 B1, which has problems of cost, complexity, durability and possibly varied rotational speed relative to crank angle. A geared coupling is shown in DE 3644721 A1, which has problems of size complexity and frictional power lower loss.

US-A-2003/0221896 discloses an electric power steering belt tentioner the objective of which is to minimize vibration and noise by setting belt tension during assembly. The belt spans between an input pulley having a center axis and an output pulley having a center axis, wherein the center distance is fixed during assembly.

A simple, durable and low cost valve drive systems is needed for variable compression ratio engines having an adjustable camshaft to crankshaft sprocket center distance.

### SUMMARY OF THE INVENTION

The invention is defined in claims 1 and 21, respectively. Particular embodiments of the invention are set out in the dependent claims.

According to the present invention, the carnshaft chain drive of variable compression ratio reciprocating piston engine having a crankshaft mounted in an eccentric carrier and having a variable camshaft to crankshaft sprocket center distance includes a chain guide mounted to the eccentric carrier. According to the present invention, pivotal motion of the eccentric for varying the compression ratio also moves the chain guide and in tem the chain pathway for maintaining a functional chain tension at all compression ratio settings. The present invention may be used for chain or belt drives, and may be used for driving the camshaft(s), engine accessories, and/or other power take-off shafts.

In the preferred embodiment the chain guide is pinned to the eccentric carrier at its first end and has a slide fitting at its second end, the second end being located generally close to the camshaft sprocket. The chain guide moves with pivotal motion of the eccentric to provide functional chain tension at all compression ratio settings. Preferably the slide fitting includes a secondary chain tensioner. The secondary chain tensioner preferably provides proper tension in the chain at the time of engine assembly, and optionally maintains that tension as the chain ages, but preferably provide no or very little active adjustment of the chain guide during change of compression ratio.

The present invention adds no or almost no cost to current production valve drive systems. The present invention is simple, durable, low cost, and compact in size. The present invention may be employed _ in other applications where shaft spacing is adjusted.

### BRIEF DESCRIPTION OF THE DRAWINGS

Fig. 1 is intended to schematically illustrate a chain drive for a variable compression ratio engine according to the present invention, and shows a high compression ratio setting.
Fig. 2 is similar to Fig. 1, and shows the chain guides according to the present invention at a low compression ratio setting.
Fig. 3 is a detailed view of Fig. 1, and shows a neutral first guide mount axis location.
Fig. 4 is a detailed view of Fig. 1, and shows an advanced first guide mount axis location.
Fig. 5 is similar to Fig. 1, but shows a chain guide shoe.
Fig. 6 is similar to Fig. 5, but shows a chain guide shoe having a secondary band tensioner mounted to the eccentric.
Fig. 7 is similar to Fig. 5, but shows two overhead carnshaft pulleys and a chain guide shoe having a slide mount to the eccentric.
Fig. 8 is similar to Fig. 5, but shows a chain guide shoe having a link connection to the housing near the camshaft sprocket.
Fig. 9 is intended to illustrate a V-engine having a chain drive auto-tensioner according to the present invention.

### DETAILED DESCRIPTION OF THE PREFERRED EMBODIMENTS

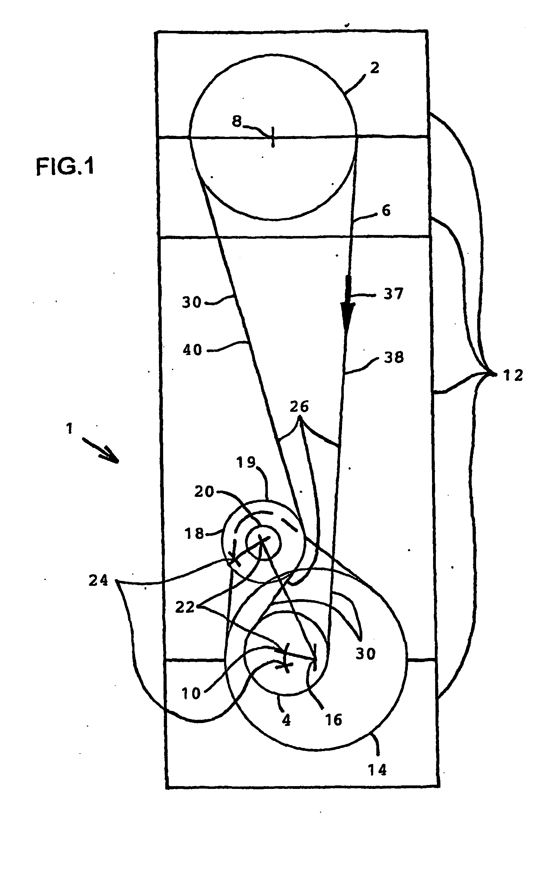

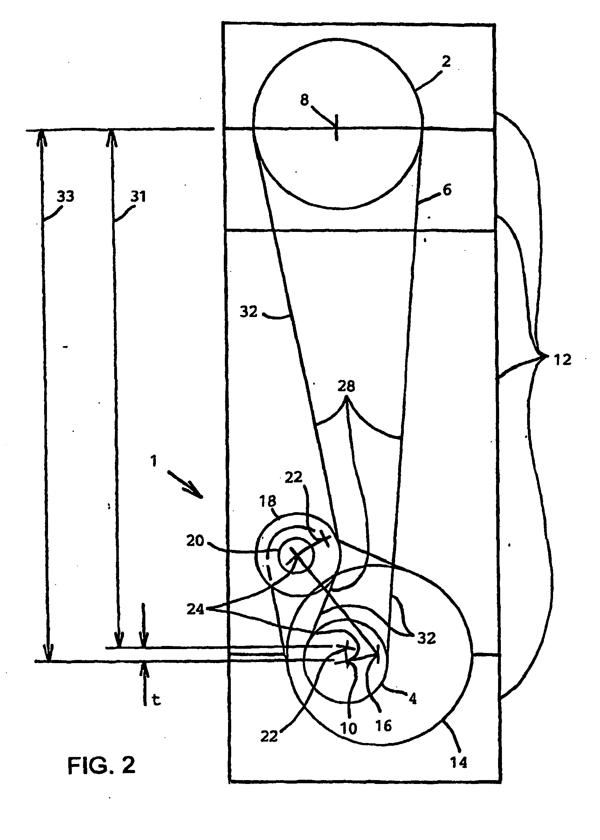

Figs. 1 and 2 show an auto-tensioner 1 according to the present invention for regulating the tension in an endless band rotatably coupling two or more pulleys having a variable center distance spacing t, including a first pulley 2, a second pulley 4, and an endless band 6. The first pulley 2 has a first axis of rotation 8 and the second pulley has a second pulley axis of rotation 10. The endless band 6 provides a rotatable coupling between first pulley 2 and second pulley 4.

A movable carrier or eccentric 14 is pivotally mounted in or to a housing 12, and in more detail eccentric 14 is pivotally mounted in housing 12 about an eccentric pivot axis 16. Housing 12 may be formed out of an assembly of component parts. As one example, the housing may optionally include an engine cylinder head plus engine block plus ladder frame. Preferably the present invention is practiced with an eccentric, however some embodiments of the present invention include a movable carrier. The SAAB variable compression ratio engine is one example of a movable carrier, and includes an engine housing and hinged movable carrier or bedplate construction.

First pulley 2 is rotatably mounted in housing 12 about first pulley axis of rotation 8 and second pulley 4 is rotatably mounted in eccentric 14 about second pulley axis of rotation 10. The second pulley axis of rotation 10 is offset from the eccentric pivot axis 16, and preferably second pulley axis of rotation 10 is parallel with eccentric pivot axis 16.

Auto-tensioner 1 further includes a band guide 18 having a first guide mount 20. Band guide 18 may be an idler pulley or sprocket 19 (shown) or a chain guide shoe or other functional band guide means.

Eccentric 14 has a first eccentric position 22 and a second eccentric position 24, and endless band 6 has a first endless band pathway 26 for first eccentric position 22 (shown in Fig. 1) and a second endless band pathway 28 for second eccentric position 24 (shown in Fig. 2).

First endless band pathway 26 has a first minimum path length 30 for first eccentric position 22, and second endless band pathway 28 has a second minimum path length 32 for second eccentric position 24.
The minimum path length is generally equal to one full circuit for an imaginary endless band, the imaginary endless band being elastic along its length so as to attain the minimum length along the pathway. The thickness of the imaginary band is assumed to be the same as the actual endless band 6.

First pulley axis of rotation 8 and second pulley axis of rotation 10 have a first pulley center distance 31 for first eccentric position 22. First pulley axis of rotation 8 and second pulley axis of rotation 10 have a second pulley center distance 33 for second eccentric position 24. Change of center distance t is equal to the difference in length of first pulley center distance 31 and second pulley center distance 33.

According to the present invention, pivotal motion of eccentric 14 from first eccentric position 22 to second eccentric position 24 adjusts the center distance between first pulley axis of rotation 8 and second pulley axis of rotation 10. As just stated, change of center distance t is equal to the difference in length of first pulley center distance 31 and second pulley center distance 33. First guide mount 20 is located in or attached to eccentric 14 for pivotal motion of band guide 18 with pivotal motion of eccentric 14 for adjusting second minimum path length 32 relative to first minimum path length 30, thereby providing auto-adjustment of the tension in endless band 6 with change of the center distance between pulleys 2 and 4, by an amount t.

According to the present invention, pivoting eccentric 14 (also referred to as a crankshaft cradle) counterclockwise lowers second pulley axis of rotation 10 (typically the crankshaft axis of rotation) an amount t or fraction thereof and concurrently moves the idler pulley or sprocket 18 to a second idler pulley location, thereby providing adjustment of second pulley axis of rotation 10 with no or only minimal change in endless band slack and tension, endless band 6 typically being a chain or belt.

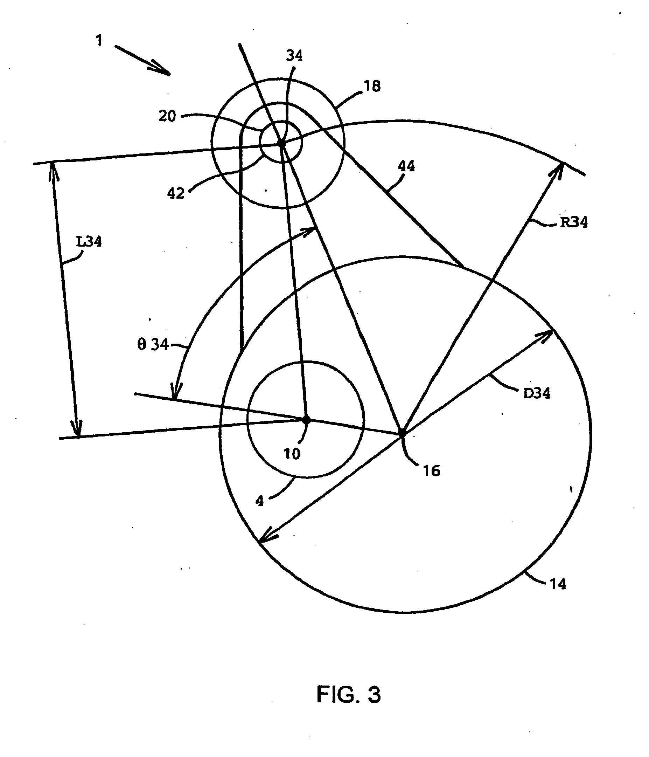

Referring now to Fig. 3, auto-tensioner 1 optionally including a neutral first guide mount or guide mount axis center 34. Neutral first guide mount 34 is located in eccentric 14 for providing a second minimum path length 32 approximately of the same length as the first minimum path length 30. Neutral first guide mount 34 and second pulley axis of rotation 10 are separated by a pulley mount center distance L₃₄. preferably, according to the present invention, pulley mount center distance L₃₄ remains constant with change of eccentric position, and in more detail pulley mount center distance L₃₄ is preferably the same length for first eccentric position 22 and second eccentric position 24. Neutral first guide mount 34 has a radial distance R₃₄ from eccentric pivot axis 16. Neutral first guide mount 34 and second pulley axis of rotation 10 define an angle θ₃₄ about eccentric pivot axis 16. The location of neutral first guide mount 34 is preferably defined by radial distance R₃₄ and angle θ₃₄. According to the present invention, the position of guide mount axis center 34 preferably provides a generally constant tension in endless band 6 at various pivot positions of eccentric 14, it being understood that there may be some minor change in tension in endless band 6 within the scope of the claimed invention.

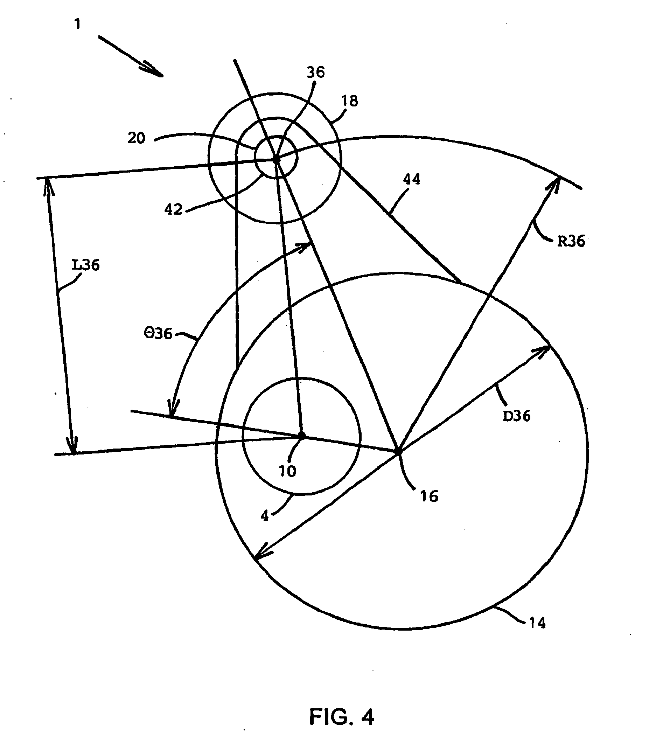

Referring now to Fig. 4, auto-tensioner 1 optionally including an advanced first guide mount or guide mount axis center 36. Advanced first guide mount 36 is located in eccentric 14 for providing a second minimum path length 32 shorter than first minimum path length 30. Advanced first guide mount 36 and second pulley axis of rotation 10 are separated by a pulley mount center distance L₃₆. Preferably, according to the present invention, pulley mount center distance L₃₆ remains constant with change of eccentric position, and in more detail pulley mount center distance L₃₆ is preferably the same length for first eccentric position 22 and second eccentric position 24. Advanced first guide mount 36 has a radial distance R₃₆ from eccentric pivot axis 16. Advanced first guide mount 36 and second pulley axis of rotation 10 define an angle θ₃₆ about eccentric pivot axis 16. The location of advanced first guide mount 36 is preferably defined by radial distance R₃₆ and angle θ₃₆.

Referring now to Figs. 3 and 4, first guide mount 20 may be attached to eccentric 14 by a pin connection 42, a bracket (not shown) or other functional means. Webbing 44 extending from eccentric 14 may optionally be used to provide a mount for pin connection 42 or another type of first guide mount 20. Alternatively, a bracket may be used to attach first guide mount 20 and/or pin connection 42 to eccentric 14. Eccentric 14 has a support bearing diameter D₃₄. Preferably, according to the present invention first guide mount 20, neutral first-guide mount axis center 34 and advanced first guide mount axis center 36 are located outside support bearing diameter D₃₄, and second pulley axis of rotation 10 is located inside support bearing diameter D₃₄ for adjusting slack in endless band 6. Optionally, second pulley axis of rotation 10 may be located outside of support bearing diameter D₃₄ (not shown). In some embodiments of the present invention first guide mount 20 may be located inside support bearing diameter D₃₄.

Referring now to Figs. 1 through 4, second pulley 4 may optionally be a drive pulley and first pulley 2 may optionally be a driven pulley. In this arrangement endless band 6 has a rotational direction 37, a tension side 38 and a slack side 40. Preferably, according to the present invention, first guide mount 20 is located on said slack side 40 of endless band 6 thereby providing auto-adjustment of the tension in the endless band.

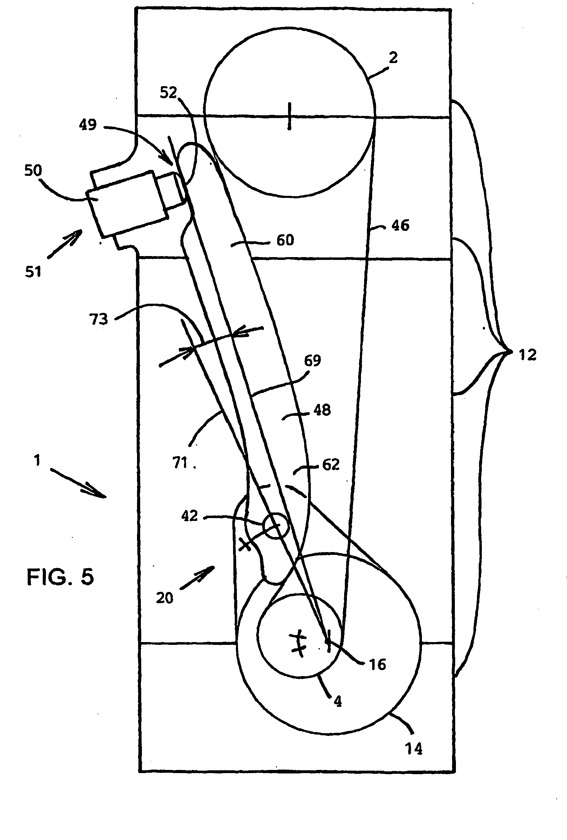

Referring now to Fig. 5 the endless band may optionally be a chain 46 and the band guide may optionally be a chain guide shoe 48. According to the present invention, chain guide shoe 48 has a first end 60 located generally near first pulley 2 and chain guide shoe 48 has a second end 62 located generally near second pulley 4. Chain guide shoe 48 may optionally have a pin connection 42 for the first guide mount to eccentric 14 at second end 62, and chain guide shoe 48 may optionally have a translation mount 49 at first end 60 near first pulley 2. Optionally, translation mount 49 may be located at the second end 62 of chain guide shoe 48. Translation mount 49 may optionally include a secondary band tensioner 50 and/or a slide fitting 52. Fig. 5 is intended to illustrate the preferred embodiment of the present invention. Preferably, according to the present invention, secondary band tensioner 50 takes up slack in chain 46, and auto-tensioner 1 provides the optimum tension setting in chain 46 at various pivot angles of eccentric 14.

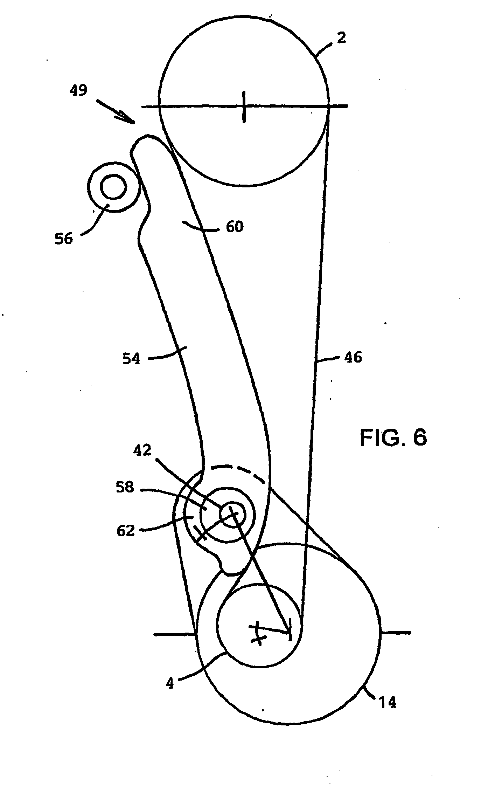

Fig. 6 is similar to Fig. 5, but show a secondary band tensioner 58 located generally at second end 62 of a chain guide shoe 54. Secondary band tensioner 58 may optionally be located in the first guide mount (shown). Secondary band tensioner 58 may optionally include an eccentric hub that may be rotated to adjust the location of chain guide shoe 54 for adjusting the tension in chain 46. Fig. 6 also shows a roller fitting 56 type translation mount 49.

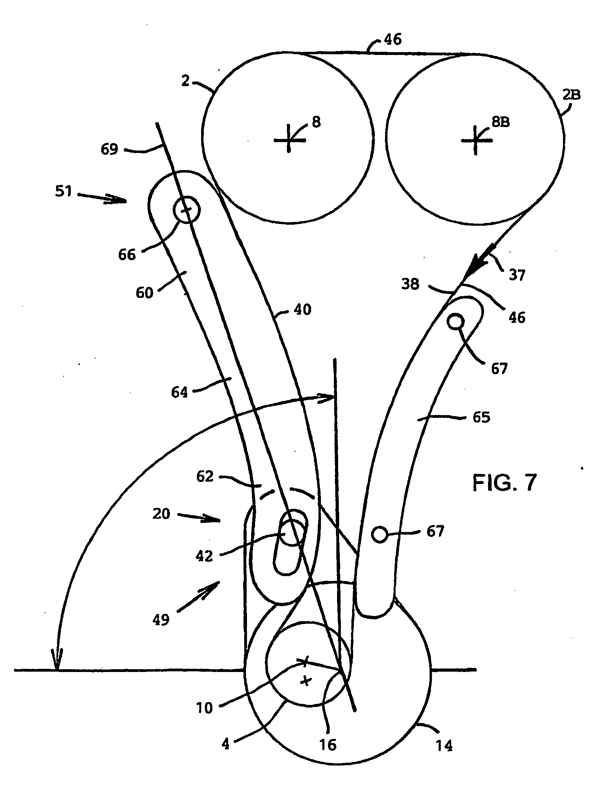

Fig. 7 is similar to Fig. 5, but shows a translation mount 49 located generally at second end 62 of a chain guide shoe 64, and a pin connection 66 located generally at first end 60 of chain guide shoe 64. Translation mount 49 may optionally be a slide fitting include a pin 42 in a slot (shown). Fig. 7 also shows a second overhead pulley 2B having a second overhead pulley axis of rotation 8B. A tension guide 65 is also optionally used to guide chain 46. Tension guide 65 preferably has mounting pins 67 or other functional means for mounting the guide to the housing. In applications where second pulley 4 is a drive pulley (for example mounted on a crankshaft) and first pulley 2 is a driven pulley (for example mounted to a camshaft or other accessory driven shaft) chain 46 has a rotational direction 37, a tension side 38 and a slack side 40. Preferably, according to the present invention, chain guide show 64 is located on the slack side 40 of chain 46, and tension guide 65 is located on the tension side 38 of chain 46.

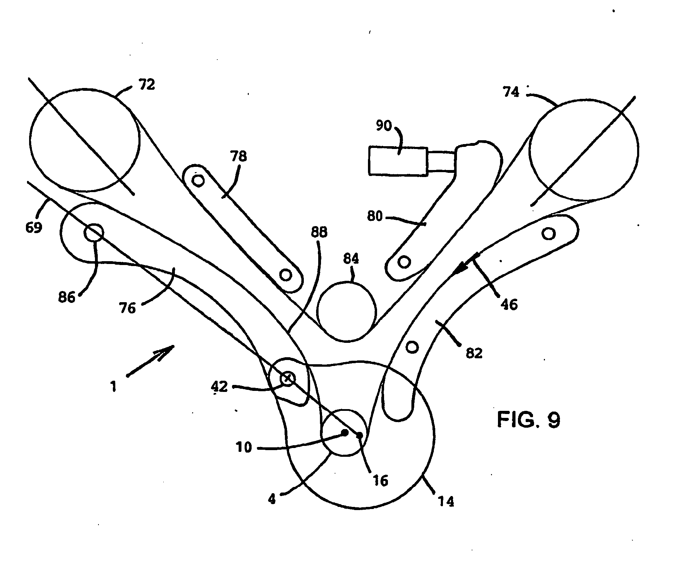

Preferably according to the present invention, pin connection 42 is located on a second imaginary line 69 that passes through eccentric pivot axis 16 and pin connection 66 generally when pulley axis 10 is at its mid point between high and low compression settings. The preferred location of the present invention minimizes sliding motion of pin 42 in translation mount 49. Referring now to Fig. 9, in some embodiments of the present invention the slot may be replaced by modestly oversized pin holes in chain guide 76 for pins 86 and 42. Referring now to Figs. 5, 7 and 9, in general terms, second imaginary line 69 passes through eccentric pivot axis 16 and a second guide mount 51 located at the first end 60 of the chain guide shoe. Second guide mount 51 may be a translation mount 49 (shown in Fig. 5) and in this case second imaginary line 69 passes generally through the translation or sliding contact surface of the translation mount, generally referred to as the guide mount center. Alternatively second guide mount 51 may be a pin connection 66 (shown in Fig. 7) or another functional type of connection. Referring now to Fig. 7, second imaginary line 69 passes through the center of pin 66, generally referred to as the guide mount center. Referring now to Fig. 5, a first imaginary line 71 passes through eccentric pivot axis 16 and the guide mount center of first guide mount 20. Second imaginary line 69 and first imaginary line 71 are separated by an offset angle 73. Preferably, according to the present invention, offset angle 73 is less than 30 degrees for at least one functional pivot angle of eccentric 14, thereby minimizing translation in first guide mount 20 and second guide mount 51, and preferably less than 15 degrees, it being understood that no off-set angle is ideal but may not be attainable in some embodiments of the present invention. In more detail, offset angle 73 is preferably less than 30 degrees for a third eccentric position, the third eccentric position being located between first eccentric position 22 and second eccentric position 24, thereby providing a minimized amount of pivotal motion for the chain guide shoe.

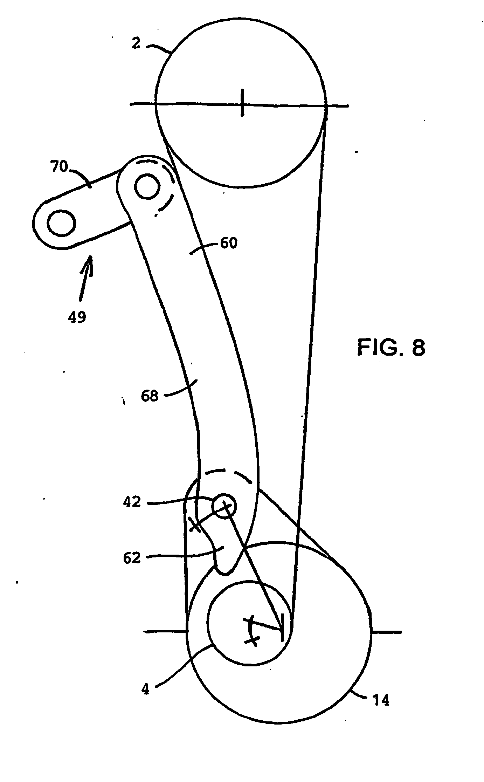

Fig. 8 is similar to Fig. 5, but shows a link connection 70 located generally at first end 60 of a chain guide shoe 68. Chain guide shoe 68 may optionally have a pin connection 42 at second end 62 or other functional attachment means. Referring now to Figs. 5 through 8, translation mount 49 may optionally be located at first end 60 or second end 62 of the chain guide shoe, and translation mount 49 may optionally be a slide fitting (shown in Figs. 5 and 7), a roller fitting (shown in Fig. 6), a link fitting (shown in Fig. 8), an oversized pin hole fitting (shown in Fig. 9), a rocker fitting (not shown), or other functional type of translation mount.

Referring now to Fig. 5, in the preferred embodiment of the present invention housing 12 includes a cylinder head and engine block of a reciprocating piston engine having a variable compression ratio, where first pulley 2 is mounted to a camshaft located in the cylinder head, and second pulley 4 is mounted to a crankshaft, the crankshaft intern being mounted in eccentric 14. Eccentric 14 pivots in housing 12 to raise and lower the crankshaft and adjust the compression ratio of the engine. Fig. 5 is intended to illustrate an in-line engine having an auto-tensioner 1 according to the present invention.

Referring now to all of the Figures, a method for taking up slack in an endless band rotatably joining two or more pulleys having a variable center distance, has the steps of,
1. mounting a first pulley in a first housing on a first pulley axis and mounting a second pulley in an eccentric or movable carrier on a second pulley axis for varying the center distance between the first pulley axis and the second pulley axis,
2. placing an endless band around at least the first pulley and the second pulley to form a rotatable coupling between the first pulley and the second pulley,
3. placing a first band guide in contact with the endless band,
4. attaching the first band guide to the movable carrier
5. moving the movable carrier to reduce the spacing between the two pulleys and concurrently press the guide further into the endless band to take up slack, thereby reducing the spacing between at least two pulleys and taking up slack in the belt.

Referring now to Fig. 9, auto-tensioner 1 can optionally be employed in V-engine architectures, such as V-6 six cylinder engines, V-8 eight cylinder engines, or a V engine having a different number of cylinders. Chain 46 is driven by a crankshaft sprocket or second pulley 4, and chain 46 drives camshaft sprockets 72 and 74, or a different arrangement and/or number of camshaft sprockets, such as with double overhead camshafts (DOHC) or a centrally located camshaft (near sprocket 84). Eccentric 14, also referred to as a crankshaft cradle, pivots to raise and lower the crankshaft and second pulley axis of rotation 10. Chain 46 is preferably retained in place by chain guides 76, 78, 80, and 82, and sprocket 84, it being understood other guide arrangements may be used to retain chain 46. According to the present invention, chain guide 76 is preferably pinned at its upper end to the engine block and/or cylinder head assembly with a pin 86 or other functional means, and pinned at its lower end to eccentric 14 with a pin 42. Preferably pin 86, pin 42 and eccentric pivot axis 16 are approximately in line at the mid compression ratio setting, thereby minimizing the change in distance between pin 86 and pin 42 during change of angular position of eccentric 14. Preferably the change in distance between pin 86 and pin 42 is small enough so that slightly oversized pin socket(s) may be used as a translation mount for retaining chain guide 76. Optionally, other guide mounts may be used as described earlier.

Chain guide 76 preferably includes a bowed surface 88 for providing approximately constant chain tension at various angular positions of eccentric 14. Chain guides 78 and 82, and sprocket 84 preferably have a fixed position. Chain guide 80 may optionally have a secondary tensioner 90 for taking up chain slack. Optionally, secondary chain tensioner 90 may replace pin 86, and in more detail a chain tensioner 90 may be used to pivot the upper end of chain guide 76 clockwise into contact with chain 46 and thereby take up chain slack.

According to the present invention, the auto-tensioner of the present invention may be used in variable compression ratio reciprocating piston engines and in other applications where the center distance between two or more sprockets varies.

## Claims

1. An auto-tensioner for regulating the tension in an endless band rotatably coupling two or more pulleys having a variable center distance spacing, comprising:
a first pulley (2) having a first pulley axis of rotation (8), a second pulley (4) having a second pulley axis of rotation (10), and an endless band (6) providing a rotatable coupling between said first pulley (2) and said second pulley (4),
a housing (12) having an eccentric (14), said eccentric (14) being pivotally mounted in or to said housing (12) about an eccentric pivot axis (16),
said first pulley (2) being rotatably mounted in said housing (12) about said first pulley axis of rotation (8) and said second pulley (4) being rotatably mounted in said eccentric (14) about said second pulley axis of rotation (10), said second pulley axis of rotation (10) being offset from said eccentric pivot axis (16), and
a band guide (18) adapted to contact the band in order to tension it, said band guide (18) having a first guide mount (20),
said eccentric (14) having a first eccentric position (22) and a second eccentric position (24), and said endless band (6) having a first endless band pathway (26) for said first eccentric position (22) and a second endless band pathway (28) for said second eccentric position (24),
said first endless band pathway (26) having a first minimum path length (30) for said first eccentric position (22), and said second endless band pathway (28) having a second minimum path length (32) for said second eccentric position (24),
wherein pivotal motion of said eccentric (14) from said first eccentric position (22) to said second eccentric position (24) adjusts the center distance (t) between said first pulley axis of rotation (8) and said second pulley axis of rotation (10),
**characterized in that**
said first guide mount (20) is located on said eccentric (14) for pivotal motion of said band guide (18) with pivotal motion of said second pulley axis (10) for adjusting said second minimum path length (32) relative to said first minimum path length (30), thereby providing auto-adjustment of the tension in the endless band (6) with change of the center distance (t) of the pulleys (2, 4).

2. The auto-tensioner of Claim 1, further including a neutral first guide mount (34), said neutral first guide mount (34) being located on said eccentric (14) for providing a second minimum path length (32) approximately of the same length as said first minimum path length (30).

3. The auto-tensioner of Claim 1, further including an advanced first guide mount (36), said advanced first guide mount (36) being located on said eccentric (14) for providing a second minimum path length (32) shorter than said first minimum path length (30), thereby providing higher tension in the endless band (6) for said second eccentric position (24) relative to said first eccentric position (22).

4. The auto-tensioner of Claim 1, wherein said second pulley (4) is a drive pulley and said first pulley (2) is a driven pulley, said endless band (6) having a tension side (38) and a slack side (40), said first guide mount (20) being located on said slack side (40) of said endless band (6) thereby providing auto-adjustment of the tension in the endless band (6).

5. The auto-tensioner of Claim 1, wherein said first guide mount (20) is a pin connection (42).

6. The auto-tensioner of Claim 1, further including a secondary band tensioner (50).

7. The auto-tensioner of Claim 6, wherein said secondary band tensioner (50) is located in said first guide mount (20).

8. The auto-tensioner of Claim 6, wherein said secondary band tensioner (50) is separate from said first guide mount (20).

9. The auto-tensioner of Claim 1, wherein said endless band (6) is a chain (46) and said band guide (18) is a chain guide shoe (48).

10. The auto-tensioner of Claim 9, wherein said chain guide shoe (48) has a first end (60), a second end (62), and a pin connection (42) and translation mount (49) for retaining said chain guide shoe (48) in contact with said chain (46).

11. The auto-tensioner of Claim 10, wherein said translation mount (49) is located generally at said second end (62) of said chain guide shoe (48), and said pin connection (42) is located generally at said first end (60) of said chain guide shoe (48).

12. The auto-tensioner of Claim 10, wherein said translation mount (49) is located generally at said first end (60) of said chain guide shoe (48), and said pin connection (42) is located generally at said second end (62) of said chain guide shoe (48).

13. The auto-tensioner of Claim 10, wherein said translation mount (49) contains a device selected from the group consisting of slide fittings (52), rollers (56), over sized pin holes, rockers or links (70).

14. The auto-tensioner of Claim 10, wherein said translation mount (49) further includes a secondary band tensioner (50).

15. The auto-tensioner of Claim 1, wherein said band guide (18) is an idler pulley.

16. The auto-tensioner of Claim 1, further including a crankshaft and a camshaft mounted in a reciprocating piston engine, said reciprocating piston engine having a compression ratio and means for varying said compression ratio,
wherein said first pulley (2) is a camshaft sprocket (72. 74) mounted on said camshaft, and said second pulley (4) is a crankshaft sprocket mounted on said crankshaft,
said crankshaft further being mounted in said eccentric (14), wherein said eccentric (14) provides means for varying said compression ratio.

17. The auto-tensioner of Claim 16, wherein said reciprocating piston engine is an in-line engine.

18. The auto-tensioner of Claim 16, wherein said reciprocating piston engine has a V-engine architecture.

19. The auto-tensioner of Claim 16, wherein said eccentric (14) has a support bearing diameter, said first pulley axis being located inside said support bearing diameter (D34).

20. The auto-tensioner of Claim 9, further including a second guide mount (51) for mounting said chain guide shoe (64) to said housing (12),
said first guide mount (20) has a first mount center and said second guide mount (51) has a second mount center, and
a first imaginary line (71) passing through said eccentric pivot axis (16) and through said first mount center, and a second imaginary line (69) passing through said eccentric pivot axis (16) and through said second mount center, and an offset angle (73) between said first imaginary line (71) and said second imaginary line (69),
wherein said offset angle (73) is less than 30 degrees for a third eccentric position, said third eccentric position being located between said first eccentric position (22) and said second eccentric position (24), thereby providing a minimized amount of pivotal motion for the chain guide shoe (48).

21. A method for regulating the tension in an endless band rotatably coupling two or more pulleys having a variable center distance, said method comprising the steps of:
rotatably mounting a first pulley (2) in a housing (12) on a first pulley axis (8),
rotatably mounting a second pulley (4) in an eccentric (14) on a second pulley axis (10) for varying the center distance between the first pulley axis (8) and the second pulley axis (10),
pivotally mounting said eccentric (14) in or to said housing (12) about an eccentric pivot axis (16), wherein pivotal motion of said eccentric (14) from a first eccentric position (22) to a second eccentric position (24) adjusts the center distance (t) between said first pulley axis of rotation (8) and said second pulley axis of rotation (10),
placing an endless band (6) around at least the first pulley (2) and the second pulley (4) to form a rotatable coupling between the first pulley (2) and the second pulley (4), and
placing a first band guide (18) having a first guide mount (20) in contact with the endless band (6) in order to tension it,
**characterized by**
locating the first guide mount (20) of the band guide (18) on said eccentric (14) that also adjusts the center distance between first and second pulleys (2, 4), thereby providing auto-adjustment of the tension in the endless band (6).

## Patentansprüche

1. Automatische Spannvorrichtung zum Regeln der Spannung in einem Endlosriemen, der zwei oder mehr Riemenscheiben mit einem variablen Mittenabstand drehbar koppelt, welche aufweist:
eine erste Riemenscheibe (2) mit einer ersten Riemenscheibendrehachse (8), eine zweite Riemenscheibe (4) mit einer zweiten Riemenscheibendrehachse (10) und einen Endlosriemen (6), der eine drehbare Kopplung zwischen der ersten Riemenscheibe (2) und der zweiten Riemenscheibe (4) vorsieht,
ein Gehäuse (12) mit einem Exzenter (14), wobei der Exzenter (14) in oder an dem Gehäuse (12) um eine Exzenterschwenkachse (16) schwenkbar montiert ist,
wobei die erste Riemenscheibe (2) in dem Gehäuse (12) um die erste Riemenscheibendrehachse (8) drehbar montiert ist und die zweite Riemenscheibe (4) in dem Exzenter (14) um die zweite Riemenscheibendrehachse (10) drehbar montiert ist, wobei die zweite Riemenscheibendrehachse (10) von der Exzenterschwenkachse (16) versetzt ist, und
eine Riemenführung (18), die dazu ausgelegt ist, den Riemen zu kontaktieren, um ihn zu spannen, wobei die Riemenführung (18) eine erste Führungshalterung (20) aufweist,
wobei der Exzenter (14) eine erste Exzenterposition (22) und eine zweite Exzenterposition (24) aufweist und der Endlosriemen (6) einen ersten Endlosriemenweg (26) für die erste Exzenterposition (22) und einen zweiten Endlosriemenweg (28) für die zweite Exzenterposition (24) aufweist,
wobei der erste Endlosriemenweg (26) eine erste minimale Weglänge (30) für die erste Exzenterposition (22) aufweist und der zweite Endlosriemenweg (28) eine zweite minimale Weglänge (32) für die zweite Exzenterposition (24) aufweist,
wobei eine Schwenkbewegung des Exzenters (14) von der ersten Exzenterposition (22) in die zweite Exzenterposition (24) den Mittenabstand (t) zwischen der ersten Riemenscheibendrehachse (8) und der zweiten Riemenscheibendrehachse (10) einstellt,
**dadurch gekennzeichnet, dass**
die erste Führungshalterung (20) an dem Exzenter (14) für eine Schwenkbewegung der Riemenführung (18) mit der Schwenkbewegung der zweiten Riemenscheibenachse (10) zum Einstellen der zweiten minimalen Weglänge (32) relativ zur ersten minimalen Weglänge (30) angeordnet ist, wodurch eine automatische Einstellung der Spannung im Endlosriemen (6) mit einer Änderung des Mittenabstandes (t) der Riemenscheiben (2, 4) bereitgestellt wird.

2. Automatische Spannvorrichtung nach Anspruch 1, welche ferner eine neutrale erste Führungshalterung (34) aufweist, wobei die neutrale erste Führungshalterung (34) an dem Exzenter (14) angeordnet ist, um eine zweite minimale Weglänge (32) mit ungefähr derselben Länge wie die erste minimale Weglänge (30) vorzusehen.

3. Automatische Spannvorrichtung nach Anspruch 1, welche ferner eine vorgerückte erste Führungshalterung (36) aufweist, wobei die vorgerückte erste Führungshalterung (36) an dem Exzenter (14) angeordnet ist, um eine zweite minimale Weglänge (32), die kürzer ist als die erste minimale Weglänge (30), vorzusehen, wodurch für die zweite Exzenterposition (24) relativ zur ersten Exzenterposition (22) eine höhere Spannung im Endlosriemen (6) bereitgestellt wird.

4. Automatische Spannvorrichtung nach Anspruch 1, wobei die zweite Riemenscheibe (4) eine Antriebsriemenscheibe ist und die erste Riemenscheibe (2) eine Abtriebsriemenscheibe ist, wobei der Endlosriemen (6) eine Spannungsseite (38) und eine lockere Seite (40) aufweist, wobei die erste Führungshalterung (20) auf der lockeren Seite (40) des Endlosriemens (6) angeordnet ist, wodurch eine automatische Einstellung der Spannung im Endlosriemen (6) vorgesehen wird.

5. Automatische Spannvorrichtung nach Anspruch 1, wobei die erste Führungshalterung (20) eine Bolzenverbindung (42) ist.

6. Automatische Spannvorrichtung nach Anspruch 1, welche ferner eine sekundäre Riemenspannvorrichtung (50) aufweist.

7. Automatische Spannvorrichtung nach Anspruch 6, wobei die sekundäre Riemenspannvorrichtung (50) in der ersten Führungshalterung (20) angeordnet ist.

8. Automatische Spannvorrichtung nach Anspruch 6, wobei die sekundäre Riemenspannvorrichtung (50) von der ersten Führungshalterung (20) getrennt ist.

9. Automatische Spannvorrichtung nach Anspruch 1, wobei der Endlosriemen (6) eine Kette (46) ist und die Riemenführung (18) eine Kettenführungsbacke (48) ist.

10. Automatische Spannvorrichtung nach Anspruch 9, wobei die Kettenführungsbacke (48) ein erstes Ende (60), ein zweites Ende (62) und eine Bolzenverbindung (42) und eine Translationshalterung (49), um die Kettenführungsbacke (48) mit der Kette (46) in Kontakt zu halten, aufweist.

11. Automatische Spannvorrichtung nach Anspruch 10, wobei die Translationshalterung (49) im Allgemeinen am zweiten Ende (62) der Kettenführungsbacke (48) angeordnet ist und die Bolzenverbindung (42) im Allgemeinen am ersten Ende (60) der Kettenführungsbacke (48) angeordnet ist.

12. Automatische Spannvorrichtung nach Anspruch 10, wobei die Translationshalterung (49) im Allgemeinen am ersten Ende (62) der Kettenführungsbacke (48) angeordnet ist und die Bolzenverbindung (42) im Allgemeinen am zweiten Ende (60) der Kettenführungsbacke (48) angeordnet ist.

13. Automatische Spannvorrichtung nach Anspruch 10, wobei die Translationshalterung (49) eine Vorrichtung enthält, die aus der Gruppe ausgewählt ist, die aus Gleitbeschlägen (52), Rollen (56), Bolzenlöchern mit Übergröße, Kipphebeln oder Verbindungsgliedern (70) besteht.

14. Automatische Spannvorrichtung nach Anspruch 10, wobei die Translationshalterung (49) ferner eine sekundäre Riemenspannvorrichtung (50) aufweist.

15. Automatische Spannvorrichtung nach Anspruch 1, wobei die Riemenführung (18) eine Umlenkriemenscheibe ist.

16. Automatische Spannvorrichtung nach Anspruch 1, welche ferner eine Kurbelwelle und eine Nockenwelle aufweist, die in einem Hubkolbenmotor montiert sind, wobei der Hubkolbenmotor ein Kompressionsverhältnis und ein Mittel zum Verändern des Kompressionsverhältnisses aufweist,
wobei die erste Riemenscheibe (2) ein Nockenwellenkettenrad (72, 74) ist, das an der Nockenwelle montiert ist, und die zweite Riemenscheibe (4) ein Kurbelwellenkettenrad ist, das an der Kurbelwelle montiert ist,
wobei die Kurbelwelle ferner in dem Exzenter (14) montiert ist, wobei der Exzenter (14) ein Mittel zum Verändern des Kompressionsverhältnisses bereitstellt.

17. Automatische Spannvorrichtung nach Anspruch 16, wobei der Hubkolbenmotor ein Reihenmotor ist.

18. Automatische Spannvorrichtung nach Anspruch 16, wobei der Hubkolbenmotor eine V-Motor-Architektur aufweist.

19. Automatische Spannvorrichtung nach Anspruch 16, wobei der Exzenter (14) einen Stützlagerdurchmesser aufweist, wobei die erste Riemenscheibenachse innerhalb des Stützlagerdurchmessers (D34) liegt.

20. Automatische Spannvorrichtung nach Anspruch 9, welche ferner eine zweite Führungshalterung (51) zum Montieren der Kettenführungsbacke (64) an dem Gehäuse (12) aufweist,
wobei die erste Führungshalterung (20) ein erstes Montagezentrum aufweist und die zweite Führungshalterung (51) ein zweites Montagezentrum aufweist, und
eine erste imaginäre Linie (71) durch die Exzenterschwenkachse (16) und durch das erste Montagezentrum verläuft, und eine zweite imaginäre Linie (69) durch die Exzenterschwenkachse (16) und durch das zweite Montagezentrum verläuft, und ein Versatzwinkel (73) zwischen der ersten imaginären Linie (71) und der zweiten imaginären Linie (69) besteht,
wobei der Versatzwinkel (71) für eine dritte Exzenterposition kleiner ist als 30 Grad, wobei die dritte Exzenterposition zwischen der ersten Exzenterposition (22) und der zweiten Exzenterposition (24) liegt, wodurch ein minimiertes Ausmaß einer Schwenkbewegung für die Kettenführungsbacke (48) bereitgestellt wird.

21. Verfahren zum Regeln der Spannung in einem Endlosriemen, der zwei oder mehr Riemenscheiben mit einem variablen Mittenabstand drehbar koppelt, wobei das Verfahren die Schritte aufweist:
drehbares Montieren einer ersten Riemenscheibe (2) in einem Gehäuse (12) auf einer ersten Riemenscheibenachse (8),
drehbares Montieren einer zweiten Riemenscheibe (4) in einem Exzenter (14) auf einer zweiten Riemenscheibenachse (10) zum Verändern des Mittenabstandes zwischen der ersten Riemenscheibenachse (8) und der zweiten Riemenscheibenachse (10),
schwenkbares Montieren des Exzenters (14) in oder an dem Gehäuse (12) um eine Exzenterschwenkachse (16), wobei eine Schwenkbewegung des Exzenters (14) von einer ersten Exzenterposition (22) in eine zweite Exzenterposition (24) den Mittenabstand (t) zwischen der ersten Riemenscheibendrehachse (8) und der zweiten Riemenscheibendrehachse (10) einstellt,
Anordnen eines Endlosriemens (6) um zumindest die erste Riemenscheibe (2) und die zweite Riemenscheibe (4), um eine drehbare Kopplung zwischen der ersten Riemenscheibe (2) und der zweiten Riemenscheibe (4) zu bilden, und
Setzen einer ersten Riemenführung (18) mit einer ersten Führungshalterung (20) in Kontakt mit dem Endlosriemen (6), um ihn zu spannen,
**gekennzeichnet durch**
Anordnen der ersten Führungshalterung (20) der Riemenführung (18) an dem Exzenter (14), der auch den Mittenabstand zwischen der ersten und der zweiten Riemenscheibe (2, 4) einstellt, wodurch eine automatische Einstellung der Spannung im Endlosriemen (6) bereitgestellt wird.

## Revendications

1. Tendeur automatique pour réguler la tension d'une bande sans fin accouplant en rotation deux ou plusieurs poulies présentant une distance de centre à centre variable, comprenant :
une première poulie (2) ayant un axe de rotation (8) de première poulie, une seconde poulie (4) ayant un axe de rotation (10) de seconde poulie, et une bande sans fin (6) réalisant un accouplement en rotation entre la première poulie (2) et la seconde poulie (4),
un carter (12) possédant un excentrique (14), l'excentrique (14) étant monté à pivotement dans ou sur le carter (12) autour d'un axe de pivot d'excentrique (16),
la première poulie (2) étant montée à rotation dans le carter (12) autour de l'axe de rotation (8) de première poulie et la seconde poulie (4) étant montée à rotation dans l'excentrique (14) autour de l'axe de rotation (10) de seconde poulie, l'axe de rotation (10) de seconde poulie étant décalé par rapport à l'axe de pivot d'excentrique (16), et
un guide de bande (18) conçu pour entrer en contact avec la bande afin de la tendre, le guide de bande (18) possédant un premier support de guide (20),
l'excentrique (14) présentant une première position excentrique (22) et une seconde position excentrique (24), et la bande sans fin (6) présentant une première trajectoire (26) de bande sans fin pour la première position excentrique (22) et une seconde trajectoire (28) de bande sans fin pour la seconde position excentrique (24),
la première trajectoire (26) de bande sans fin présentant une première longueur minimale de trajectoire (30) pour la première position excentrique (22), et la seconde trajectoire (28) de bande sans fin présentant une seconde longueur minimale de trajectoire (32) pour la seconde position excentrique (24),
sachant que le mouvement de pivotement de l'excentrique (14) de la première position excentrique (22) à la seconde position excentrique (24) règle la distance de centre à centre (t) entre l'axe de rotation (8) de première poulie et l'axe de rotation (10) de seconde poulie,
**caractérisé en ce que**
le premier support de guide (20) est situé sur l'excentrique (14) en vue d'un mouvement de pivotement du guide de bande (18) avec le mouvement de pivotement de l'axe de rotation (10) de seconde poulie afin de régler la seconde longueur minimale de trajectoire (32) par rapport à la première longueur minimale de trajectoire (30), assurant ainsi un réglage automatique de la tension de la bande sans fin (6) lorsque la distance de centre à centre (t) des poulies (2, 4) varie.

2. Tendeur automatique selon la revendication 1, comprenant en outre un premier support de guide neutre (34), le premier support de guide neutre (34) étant situé sur l'excentrique (14) afin de fournir une seconde longueur minimale de trajectoire (32) approximativement de la même longueur que la première longueur minimale de trajectoire (30).

3. Tendeur automatique selon la revendication 1, comprenant en outre un premier support de guide avancé (36), le premier support de guide avancé (36) étant situé sur l'excentrique (14) afin de fournir une seconde longueur minimale de trajectoire (32) plus courte que la première longueur minimale de trajectoire (30), assurant ainsi une tension plus élevée de la bande sans fin (6) pour la seconde position excentrique (24) par rapport à la première position excentrique (22).

4. Tendeur automatique selon la revendication 1, sachant que la seconde poulie (4) est une poulie menante et la première poulie (2) est une poulie menée, la bande sans fin (6) possédant un brin tendu (38) et un brin mou (40), le premier support de guide (20) étant situé sur le brin mou (40) de la bande sans fin (6), assurant ainsi un réglage automatique de la tension de la bande sans fin (6).

5. Tendeur automatique selon la revendication 1, sachant que le premier support de guide (20) est une liaison à broche (42).

6. Tendeur automatique selon la revendication 1, comprenant en outre un tendeur de bande secondaire (50).

7. Tendeur automatique selon la revendication 6, sachant que le tendeur de bande secondaire (50) est situé sur le premier support de guide (20).

8. Tendeur automatique selon la revendication 6, sachant que le tendeur de bande secondaire (50) est séparé du premier support de guide (20).

9. Tendeur automatique selon la revendication 1, sachant que la bande sans fin (6) est une chaîne (46) et le guide de bande (18) est un patin de guidage de chaîne (48).

10. Tendeur automatique selon la revendication 9, sachant que le patin de guidage de chaîne (48) possède une première extrémité (60), une deuxième extrémité (62), et une liaison à broche (42) et un support à translation (49) pour maintenir le patin de guidage de chaîne (48) en contact avec la chaîne (46).

11. Tendeur automatique selon la revendication 10, sachant que le support à translation (49) est situé globalement à la seconde extrémité (62) du patin de guidage de chaîne (48), et la liaison à broche (42) est située globalement à la première extrémité (60) du patin de guidage de chaîne (48).

12. Tendeur automatique selon la revendication 10, sachant que le support à translation (49) est situé globalement à la première extrémité (60) du patin de guidage de chaîne (48), et la liaison à broche (42) est située globalement à la seconde extrémité (62) du patin de guidage de chaîne (48).

13. Tendeur automatique selon la revendication 10, sachant que le support à translation (49) comprend un dispositif sélectionné dans le groupe constitué de fixations à glissement (52), de galets (56), de perçages surdimensionnés, de bras oscillants ou de bielles (70).

14. Tendeur automatique selon la revendication 10, sachant que le support à translation (49) comprend en outre un tendeur de bande secondaire (50).

15. Tendeur automatique selon la revendication 1, sachant que le guide de bande (18) est une poulie folle.

16. Tendeur automatique selon la revendication 1, comprenant en outre un vilebrequin et un arbre à came montés dans un moteur à pistons alternatifs, le moteur à pistons alternatifs présentant un taux de compression et des moyens pour faire varier le taux de compression,
sachant que la première poulie (2) est un pignon d'arbre à cames (72, 74) monté sur l'arbre à cames, et la seconde poulie (4) est un pignon de vilebrequin monté sur le vilebrequin,
le vilebrequin étant en outre monté dans l'excentrique (14), sachant que l'excentrique (14) fournit des moyens pour faire varier le taux de compression.

17. Tendeur automatique selon la revendication 16, sachant que le moteur à pistons alternatifs est un moteur à cylindres en ligne.

18. Tendeur automatique selon la revendication 16, sachant que le moteur à pistons alternatifs possède une architecture en V.

19. Tendeur automatique selon la revendication 16, sachant que l'excentrique (14) possède un diamètre de palier de soutien, l'axe de première poulie étant situé à l'intérieur du diamètre de palier de soutien (D34).

20. Tendeur automatique selon la revendication 9, comprenant en outre un second support de guide (51) pour monter le patin de guidage de chaîne (64) sur le carter (12),
le premier support de guide (20) possédant un centre de premier support et le second support de guide (51) possédant un centre de second support, et
une première ligne imaginaire (71) passant par l'axe de pivot d'excentrique (16) et par le centre de premier support, une seconde ligne imaginaire (69) passant par l'axe de pivot d'excentrique (16) et par le centre de second support, et un angle de décalage (73) entre la première ligne imaginaire (71) et la seconde ligne imaginaire (69),
sachant que l'angle de décalage (73) est inférieur à 30 degrés pour une troisième position excentrique, la troisième position excentrique étant située entre la première position excentrique (22) et la seconde position excentrique (24), assurant ainsi un montant minimal de mouvement de pivotement pour le patin de guidage de chaîne (48).

21. Procédé pour réguler la tension d'une bande sans fin accouplant en rotation deux ou plusieurs poulies présentant une distance de centre à centre variable, le procédé comprenant les étapes consistant à :
monter à rotation une première poulie (2) dans un carter (12) sur un axe (8) de première poulie,
monter à rotation une seconde poulie (4) dans un excentrique (14) sur un axe (10) de seconde poulie, pour faire varier la distance de centre à centre entre l'axe (8) de première poulie et l'axe (10) de seconde poulie,
monter à pivotement l'excentrique (14) dans ou sur le carter (12) autour d'un axe de pivot d'excentrique (16), sachant que le mouvement de pivotement de l'excentrique (14) d'une première position excentrique (22) à une seconde position excentrique (24) règle la distance de centre à centre (t) entre l'axe de rotation (8) de première poulie et l'axe de rotation (10) de seconde poulie,
placer une bande sans fin (6) autour au moins de la première poulie (2) et de la seconde poulie (4), pour former un accouplement à rotation entre la première poulie (2) et la seconde poulie (4), et
placer un guide de bande (18) possédant un premier support de guide (20) en contact avec la bande sans fin (6) afin de la tendre,
**caractérisé par** l'étape consistant à
placer le premier support de guide (20) du guide de bande (18) sur l'excentrique (14) qui règle également la distance de centre à centre entre la première poulie (2) et la seconde poulie (4), assurant ainsi un réglage automatique de la tension de la bande sans fin (6).
